# EUROPÄISCHE PATENTSCHRIFT

(11) **EP 3 423 336 B1**
(45) Veröffentlichungstag und Bekanntmachung des Hinweises auf die Patenterteilung: **01.04.2020**
(21) Anmeldenummer: 17706756.8
(22) Anmeldetag: 22.02.2017
(51) Int. Cl.: B62D 25/08, B62D 25/16

(54) **FAHRZEUGKAROSSERIE**
VEHICLE BODY
CARROSSERIE DE VÉHICULE

(30) Priorität: 29.02.2016 DE 102016203163
(43) Veröffentlichungstag der Anmeldung: 09.01.2019
(73) Patentinhaber: Bayerische Motoren Werke Aktiengesellschaft, 80809 München (DE)
(72) Erfinder: HAAS, Thorsten, 85716 Unterschleißheim (DE); FICHTINGER, Gerhard, 85630 Grasbrunn (DE)
(86) Internationale Anmeldenummer: PCT/EP2017/054036
(87) Internationale Veröffentlichungsnummer: WO 2017/148765

(56) Entgegenhaltungen:
- EP-A2- 1 153 823
- EP-A2- 2 570 334
- US-A1- 2016 031 484

## Beschreibung

### TECHNISCHES GEBIET

Die Erfindung betrifft eine Fahrzeugkarosserie mit einer inneren Karosseriestruktur und einer äußeren Karosseriehaut nach dem Oberbegriff des Patentanspruchs 1.

### STAND DER TECHNIK

Bei vielen Fahrzeugen weist die Vorderachse Federbeine auf, deren obere Befestigungspunkte in einem Federbeintopf der Karosseriestruktur liegen. Diese Befestigungspunkte müssen sowohl bei der Fahrzeugfertigung als auch später für Wartungs- oder Reparaturzwecke zugänglich sein. Daher sind die Federbeintöpfe des Fahrzeugvorderbaus üblicherweise so angeordnet, dass sie durch Öffnen einer Frontklappe zugänglich sind. Das bedingt, dass die Frontklappe so breit ist, dass sie sich zwischen den beiden äußeren seitlichen Begrenzungen der beiden Federbeintöpfe erstreckt. Dazu kann eine Frontklappe beispielsweise so ausgestaltet sein, dass sie die Oberseite des Fahrzeugvorderbaus umgreift, so dass sich die jeweilige Frontklappenfuge nahe der oder an der Fahrzeugaußenseite befindet. Soll die seitliche Frontklappenfuge jedoch, beispielsweise aus gestalterischen Gründen, auf der Oberseite des Fahrzeugvorderbaus innen liegen, so kann es je nach Größe und Konstruktion des Fahrzeugs dazu kommen, dass die Oberseite des jeweiligen Federbeintopfes außerhalb des von der Frontklappe abgeschlossenen Raums, also unterhalb des nach innen herumgezogenen vorderen Karosserieseitenteils, liegt. Es können somit Zielkonflikte zwischen gestalterischen und technischen Anforderungen auftreten, die es zu lösen gilt.

Dokument US 2016/031484 A1 beschreibt die Merkmale des Oberbegriffs des unabhängigen Anspruchs 1.

### DARSTELLUNG DER ERFINDUNG

Aufgabe der vorliegenden Erfindung ist es daher, eine gattungsgemäße Fahrzeugkarosserie anzugeben, die es ermöglicht, den Fahrzeugvorderbau mit einer schmalen Frontklappe zu versehen, deren seitliche Fugen bezüglich des Karosserieseitenteils innen liegen, beispielsweise auf der zur Fahrzeuglängsmittelebene weisenden Seite der jeweiligen Frontscheinwerfer liegen, und bei der es dennoch möglich ist, die Oberseite des jeweiligen Federbeintopfes mit Werkzeugen erreichen zu können.

Diese Aufgabe wird durch die Fahrzeugkarosserie mit den Merkmalen des Patentanspruchs 1 gelöst.

Bei dieser Fahrzeugkarosserie mit einer inneren Karosseriestruktur und einer äußeren Karosseriehaut weist die Karosseriestruktur im Bereich eines Fahrzeugvorderbaus einen linken Stützträger und einen rechten Stützträger sowie einen linken Federbeintopf und einen rechten Federbeintopf zur Aufnahme jeweils eines zum Fahrwerk des Fahrzeugs gehörenden Federbeins auf. Der jeweilige Federbeintopf liegt auf der zur Längsmittelebene des Fahrzeugs gelegenen Seite des zugehörigen Stützträgers und die Karosseriehaut weist im Bereich des Fahrzeugvorderbaus ein linkes vorderes Karosserieseitenteil, ein rechtes vorderes Karosserieseitenteil und eine zwischen diesen vorderen Karosserieseitenteilen angeordnete Frontklappe auf. Diese erfindungsgemäße Fahrzeugkarosserie zeichnet sich dadurch aus, dass das linke vordere Karosserieseitenteil den linken Federbeintopf überdeckt, dass das rechte vordere Karosserieseitenteil den rechten Federbeintopf überdeckt, dass am linken Stützträger ein linkes vorderes Karosseriehaut-Stützelement angebracht ist, das das linke vordere Karosserieseitenteil oberhalb der Oberseite des linken Federbeintopfs abstützt und einen vertikalen Abstand zwischen dem Federbeintopf und dem linken vorderen Karosserieseitenteil bestimmt, durch den die Oberseite des linken Federbeintopfs zugänglich bleibt, und dass am rechten Stützträger ein rechtes vorderes Karosseriehaut-Stützelement angebracht ist, das das rechte vordere Karosserieseitenteil oberhalb der Oberseite des rechten Federbeintopfs abstützt und einen vertikalen Abstand zwischen dem Federbeintopf und dem rechten vorderen Karosserieseitenteil bestimmt, durch den die Oberseite des rechten Federbeintopfs zugänglich bleibt.

### VORTEILE

Das erfindungsgemäße Vorsehen von Karosseriehaut-Stützelementen am jeweiligen seitlichen Stützträger der Karosseriestruktur ermöglicht es, den zur Fahrzeuglängsmittelebene nach innen herumgezogenen oberen Abschnitt des vorderen Karosserieseitenteils in einem vertikalen Abstand zur Oberseite des zugeordneten Federbeintopfes zu halten, nach unten hin abzustützen und gleichzeitig die dünne Karosseriehaut des herumgezogenen Bereichs des Karosserieseitenteils zu unterstützen und zu versteifen. Das Vorsehen eines vertikalen Abstandes zwischen dem seitlichen Stützträger und dem oberen Abschnitt des vorderen Karosserieseitenteils schafft zudem einen Verformungsraum, der für den Fußgängerschutzfall, das heißt beispielsweise bei einem Kopfaufprall auf die Frontklappe oder auf das vordere Karosserieseitenteil, vorgesehen ist. Das Karosseriehaut-Stützelement ist dazu so ausgeführt, dass es im Fußgängerschutzfall nachgeben kann. Die Versteifung des oberen Abschnitts des vorderen Karosserieseitenteils durch das Karosseriehaut-Stützelement verhindert somit zwar ein Einbeulen des herumgezogenen Bereichs des Karosserieseitenteils bei eventueller geringer Druckbelastung von oben, gestattet aber bei einem Kopfaufprall eines Fußgängers eine ausreichende Verformung sowohl des Karosseriehaut-Stützelements als auch des herumgezogenen vorderen Karosserieseitenteils. Zur Erzielung desselben Vorteils sorgt das Karosseriehaut-Stützelement auch dafür, dass ein vertikaler Abstand zwischen dem oberen Abschnitt des vorderen Karosserieseitenteils und der Oberseite des Federbeintopfs besteht, wodurch außerdem ein Zugriffsraum geschaffen ist, durch den an den an der Oberseite des jeweiligen Federbeintopfs vorgesehenen Schraubverbindungen zur Befestigung des Federbeins an der Karosseriestruktur mit Werkzeugen gearbeitet werden kann.

Ein besonderer Vorteil dieser erfindungsgemäßen Lösung besteht auch darin, dass ein Fahrzeug, welches zunächst mit einer sich nahezu über die gesamte Breite des Fahrzeugvorderbaus erstreckenden Frontklappe mit seitlichen Frontklappenfugen konstruiert und ausgestattet wurde, bei einem so genannten "facelift" zu einem Fahrzeug mit innen liegenden Frontklappenfugen und schmaler Frontklappe umkonstruiert werden kann, ohne dass die innere Karosseriestruktur mit den vorderen Stützträgern und den Federbeintöpfen geändert werden muss.

Vorzugsweise ist das jeweilige Karosseriehaut-Stützelement mit zumindest einer Durchgriffsöffnung versehen, durch die ein Zugang zur Oberseite des zugehörigen Federbeintopfs gebildet ist. Durch eine solche Durchgriffsöffnung ist ein Zugang zu den auf der Oberseite des Federbeintopfs vorgesehenen Schraubverbindungen für das Federbein geschaffen.

Von Vorteil ist es auch, wenn das jeweilige Karosseriehaut-Stützelement mit einer auf der zur Fahrzeuglängsmittelebene weisenden Seite des zugehörigen Stützträgers gelegenen Trägerstruktur versehen oder verbunden ist, die zur Aufnahme und/oder Anbringung eines Scharniers der Frontklappe und/oder eines Frontklappen-Stützelements, aber auch anderer Bauteile, wie zum Beispiel eines Wischwasserbehälters, eines Ansauggeräuschdämpfers und/oder eines Bowdenzugs ausgebildet ist. Eine solche Trägerstruktur ermöglicht auf besonders elegante Weise die Anlenkung der Frontklappe an der Karosseriestruktur. Die Frontklappenscharniere können wegen der innenliegenden Fuge zwischen der Frontklappe und der vorderen Karosserieseitenwand nicht am Stützträger oder an der A-Säule angebracht werden. Aus Bauraumgründen können die Scharniere bei innenliegender Fuge auch nicht an der Stirnwand angebracht werden, da der Bauraum dort bereits durch zum Beispiel eine Scheibenwischeranlage und/oder einen Bremskraftverstärker bereits belegt ist.

Dabei ist es besonders von Vorteil, wenn die Trägerstruktur auf der zur Fahrzeuglängsmittelebene weisende Seite des zugehörigen Federbeintopfs gelegen ist und wenn die zumindest eine Durchgriffsöffnung in der Trägerstruktur vorgesehen ist. Die Lage der Trägerstruktur ermöglicht das Vorsehen einer besonders schmalen Frontklappe und damit von weit innen liegenden Frontklappenseitenfugen. Das Vorsehen der Durchgriffsöffnung sorgt dabei für die Zugänglichkeit des Raumes oberhalb der Oberseite des Federbeintopfs und damit einen Werkzeugzugang zur Verschraubung des Federbeins.

Die Erfindung betrifft auch ein Verfahren zur Montage eines vorderen Karosserieseitenteils einer erfindungsgemäß ausgestalteten Fahrzeugkarosserie. Dieses Verfahren zeichnet sich aus durch die Schritte:
a) Bereitstellen eines Karosserierohbaus mit einem Fahrzeugvorderbau, der einen linken und einen rechten Federbeintopf und auf der zur Fahrzeugaußenseite weisenden Seite des jeweiligen Federbeintopfs einen linken und einen rechten vorderen Stützträger aufweist, die jeweils mit einem oberhalb des Federbeintopfs gelegenen vorderen Karosseriehaut-Stützelement versehen sind;
b) Montage der vorderen Federbeine im jeweils zugeordneten Federbeintopf der Karosseriestruktur und
c) Montage des jeweiligen vorderen Karosserieseitenteils an der Karosseriestruktur, wobei sich ein Bereich der Karosseriehaut des jeweiligen vorderen Karosserieseitenteils auf dem zugeordneten Karosseriehaut-Stützelement abstützt.

Dieses Montageverfahren ist besonders für die Fahrzeugfertigung geeignet.

Alternativ kann das Verfahren auch gemäß den nachstehenden Schritten ausgebildet sein:
a') Bereitstellen eines Karosserierohbaus mit einem Fahrzeugvorderbau, der einen linken und einen rechten Federbeintopf und auf der zur Fahrzeugaußenseite weisenden Seite des jeweiligen Federbeintopfs einen linken und einen rechten vorderen Stützträger aufweist, die jeweils mit einem oberhalb des Federbeintopfs gelegenen vorderen Karosseriehaut-Stützelement versehen sind;
b') Montage des jeweiligen vorderen Karosserieseitenteils an der Karosseriestruktur, wobei sich ein Bereich der Karosseriehaut des jeweiligen vorderen Karosserieseitenteils auf dem zugeordneten Karosseriehaut-Stützelement abstützt und
c') Montage der vorderen Federbeine im jeweils zugeordneten Federbeintopf der Karosseriestruktur.

Von Vorteil ist es bei beiden Verfahren, wenn das jeweilige vordere Karosserieseitenteil mit dem zugeordneten Karosseriehaut-Stützelement fest verbunden, vorzugsweise gefügt (zum Beispiel verschweißt, verklebt, verhakt oder verschraubt), wird.

Bevorzugte Ausführungsbeispiele der Erfindung mit zusätzlichen Ausgestaltungsdetails und weiteren Vorteilen sind nachfolgend unter Bezugnahme auf die beigefügte Zeichnung näher beschrieben und erläutert.

### KURZE BESCHREIBUNG DER ZEICHNUNGEN

Es zeigt:
- Fig. 1: eine teilweise geschnittene Vorderansicht der (in Fahrtrichtung gesehen) linken Seite eines erfindungsgemäß ausgestalteten Fahrzeugvorderbaus und
- Fig. 2: eine Draufsicht auf den Ausschnitt des Fahrzeugvorderbaus aus Fig. 2, ebenfalls teilweise aufgeschnitten.

### DARSTELLUNG VON BEVORZUGTEN AUSFÜHRUNGSBEISPIELEN

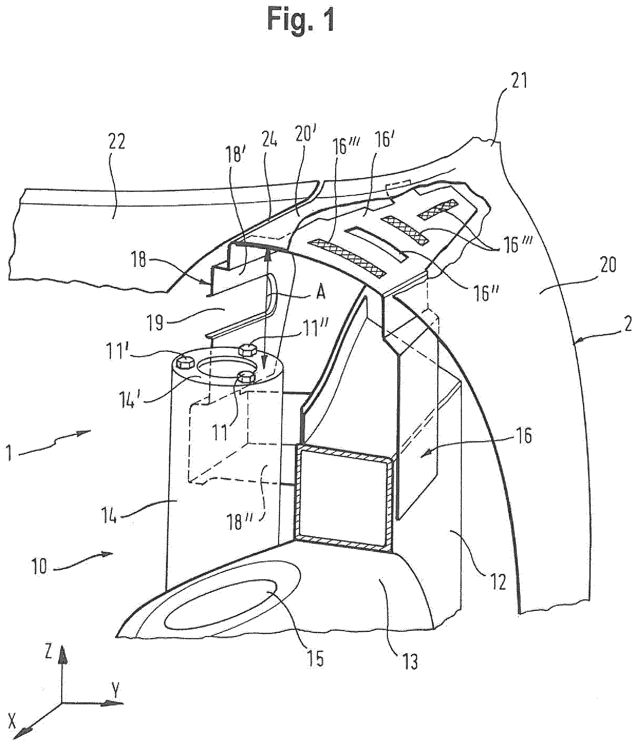

In Fig. 1 ist in teilweise aufgeschnittener perspektivischer Darstellung ein Fahrzeugvorderbau 10 einer inneren Karosseriestruktur 1 einer Fahrzeugkarosserie gezeigt. Außen auf die innere Karosseriestruktur 1 aufgebracht ist eine äußere Karosseriehaut 2, die die äußere Gestalt des Fahrzeugs bestimmt. Fig. 1 zeigt nur einen Ausschnitt des Fahrzeugvorderbaus 10, nämlich die in Fahrtrichtung gesehen linke vordere Fahrzeugseite. Die in Fahrtrichtung gesehen rechte vordere Fahrzeugseite ist spiegelverkehrt dazu aufgebaut. Die Erfindung wird daher nachstehend nur anhand der in Fig. 1 dargestellten linken vorderen Fahrzeugseite beschrieben, wobei es selbstverständlich ist, dass die Erfindung in spiegelverkehrtem Aufbau auch auf der rechten vorderen Fahrzeugseite realisiert ist.

Wesentliche Elemente des Fahrzeugvorderbaus 10 sind im Bereich der Fahrzeugseiten vorgesehene Stützträger 12 der Karosseriestruktur 1, wobei in Fig. 1 nur der linke Stützträger 12 dargestellt ist. An diesen Stützträgern 12 sind die (nicht gezeigten) Fahrwerkskomponenten der Vorderachse angebracht, so dass über die Stützträger das Fahrzeuggewicht auf die vorderen Radaufhängungen und damit auf der Straße abgestützt wird. Des Weiteren dienen die vorderen Stützträger im Falle eines Unfalls zur Aufnahme von Kollisionskräften.

An der zur vertikalen Fahrzeuglängsmittelebene XZ gelegenen Seite des in Fig. 1 gezeigten linken Stützträgers 12 ist ein linker Federbeintopf 14 befestigt, der mit einer unteren Öffnung 15 in ein zugehöriges linkes Radhaus 13 mündet. Das (in Fig. 1 nicht gezeigt) Federbein wird von unten durch das Radhaus 13 und die Öffnung 15 in den Federbeintopf 14 eingeführt und an der Oberseite 14' des Federbeintopfs mit in Fig. 1 nur schematisch dargestellten Schraubbefestigungen 11, 11', 11" am Federbeintopf 14 und damit an der inneren Karosseriestruktur 1 befestigt.

Die Karosserieaußenhaut 2 wird in dem in Fig. 1 gezeigten Abschnitt des Fahrzeugvorderbaus von Karosserieseitenteilen gebildet, wobei in Fig. 1 nur das linke vordere Karosserieseitenteil 20 dargestellt ist. Dieses linke vordere Karosserieseitenteil 20 ist an einem (nicht gezeigten) Windlauf unterhalb der Windschutzscheibe des Fahrzeugs angebracht und geht beispielsweise, wie in Fig. 1 andeutungsweise dargestellt ist, in die linke vordere A-Säule 21 der Fahrzeugkarosserie über. Auch im in der Figur nicht gezeigten unteren Bereich der Fahrzeugkarosserie ist das vordere Karosserieseitenteil 20 mit der inneren Karosseriestruktur 1 verbunden.

Wie in Fig. 1 zu erkennen ist, ist das linke vordere Karosserieseitenteil 20 an seiner Oberseite zur Fahrzeuglängsmittelebene XZ hin herumgezogen. Zur Abstützung dieses im Wesentlichen in die Horizontale herumgezogenen Bereichs 20' des Karosserieseitenteils 20 ist ein Karosseriehaut-Stützelement 16 vorgesehen, welches am Stützträger 12, mittels eines Fügeverfahrens, beispielsweise durch Verschrauben,, Verschweißen, Verhaken oder durch Kleben, angebracht, also gefügt, ist. Dieses Karosseriehaut-Stützelement 16, das an der Außenseite des Stützträgers 12 befestigt ist, erstreckt sich vom Stützträger 12 nach oben und schmiegt sich dort mit einem Unterstützungsabschnitt 16' von unten an den Bereich 20' des vorderen Karosserieseitenteils 20 an. Zwischen dem Unterstützungsabschnitt 16' des Karosseriehaut-Stützelements 16 und der Oberseite 14' des Federbeintopfs 14 ist ein vertikaler Abstand A gebildet, der es ermöglicht, mittels eines Werkzeugs auf die Verschraubungen 11, 11', 11" des Federbeins an der Oberseite 14' des Federbeintopfs 14 zuzugreifen.

An seinem zur Fahrzeuglängsmittelebene XZ weisenden inneren Ende ist der Unterstützungsabschnitt 16' des Karosseriehaut-Stützelements 16 mit einer sich nach unten erstreckenden Trägerstruktur 18 versehen, die ein vertikales oder schräg mit einer Vertikalkomponente ausgerichtetes erstes Trägerelement 18' und ein an dessen unterem Ende zum Stützträger 12 verlaufendes horizontales oder schräg mit einer Horizontalkomponente ausgerichtetes zweites Trägerelement 18" aufweist, welches mit dem Stützträger 12 verbunden ist. Das erste Trägerelement 18' ist mit einer Durchgriffsöffnung 19 versehen, durch welche hindurch ein Zugang in den Raum zwischen der Oberseite 14' des Federbeintopfs 14 und dem Unterstützungsabschnitt 16' des Karosseriehaut-Stützelements 16 geschaffen wird. Durch diese Öffnung 19' ist es daher möglich, die Verschraubungen 11, 11', 11" des Federbeins am Federbeintopf 14 mit Werkzeugen zu erreichen.

Der erste Trägerelement 18' der Trägerstruktur 18 dient auch zur Anbringung eines Scharniers für die in Fig. 1 nur schematisch dargestellte Frontklappe 22, wobei das Scharnier in Fig. 1 aus Gründen der Übersichtlichkeit nicht dargestellt ist. Auch andere Bauteile, wie zum Beispiel ein Wischwasserbehälter, ein Ansauggeräuschdämpfer und/oder ein Bowdenzug können daran angebracht sein. Die Frontklappe 22 ist daher mittels des (nicht gezeigten) Scharniers an der Trägerstruktur 18 schwenkbar gelagert. Am ersten Tragelement 18' der Trägerstruktur 18 kann außerdem ein Frontklappen-Stützelement für die geöffnete Frontklappe, zum Beispiel eine Gasdruckfeder, angebracht sein. In Fig. 1 ist außerdem die sich zwischen der zur Fahrzeuglängsmittelebene XZ weisenden Begrenzungskante des oberen Bereichs 20' des Karosserieseitenteils 20 und der (in Fahrtrichtung gesehen) linken Seitenkante der Frontklappe 22 erstreckende Frontklappenfuge 24 zu erkennen.

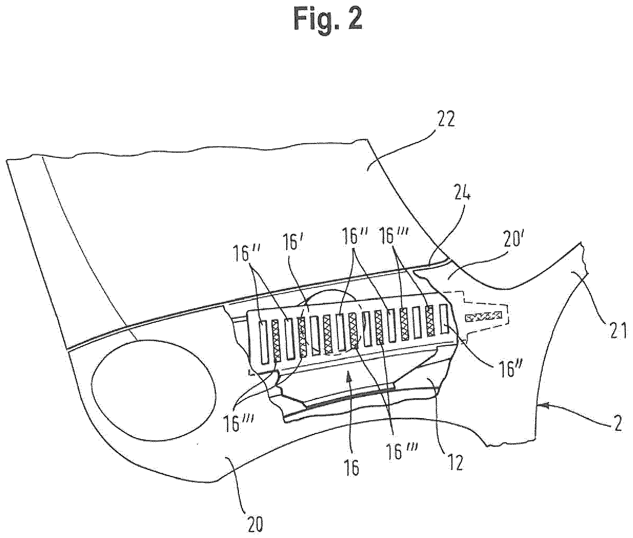

In dem in Fig. 1 aufgebrochenen Abschnitt des oberen im Wesentlichen horizontalen Bereichs 20' des vorderen Karosserieseitenteils 20 sind die Lage und die Ausgestaltung des oberen Unterstützungsabschnitts 16' des Karosseriehaut-Stützelements 16 zu sehen. Dieser obere Unterstützungsabschnitts 16' ist, wie auch in Fig. 2 zu erkennen ist, mit einer Mehrzahl von Durchbrüchen 16" versehen, die einerseits aus Gründen der Gewichtsreduktion vorgesehen sind, die aber andererseits auch Durchgriffsöffnungen zu dem Raum oberhalb der Oberseite 14' des Federbeintopfs 14 bilden, wie in Fig. 2 zu erkennen ist, um die Zugänglichkeit zu den Federbeinverschraubungen zu ermöglichen. Diese Durchbrüche können auch für die Zugänglichkeit im Reparaturfall dienen, denn durch die Durchbrüche kann man kleinere Dellen in der Karosserie-Außenhaut mittels eines Werkzeugs herausdrücken.

Auf der Oberseite des Abschnitts 16' des Karosseriehaut-Stützelements 16 sind zwischen den Durchbrüchen 16" Befestigungselemente 16'", beispielsweise Klebestellen, vorgesehen, an denen der Unterstützungsabschnitt 16' des Karosseriehaut-Stützelements 16 mit dem oberen Bereich 20' des vorderen Karosserieseitenteils 20 verklebt ist.

Ist bei der Fertigung des Fahrzeugs das vordere Karosserieseitenteil 20 zum Zeitpunkt der Montage des Fahrwerks an der Fahrzeugkarosserie ("Hochzeit") bereits mit der inneren Karosseriestruktur 1 verbunden, so erfolgt die Verschraubung des Federbeins mittels der Schraubverbindungen 11, 11', 11" durch die Durchgriffsöffnung 19 im vertikalen Trägerelement 18' der Trägerstruktur 18. Ist hingegen das vordere Karosserieseitenteil 20 noch nicht mit der inneren Karosseriestruktur 1 verbunden, so sind die Schraubverbindungen 11, 11', 11" durch die von den Durchbrüchen 16" gebildeten Durchgriffsöffnungen für Schraubwerkzeuge zugänglich. In diesem Fall wird das Karosserieseitenteil 20 erst nach der "Hochzeit" an der Karosseriestruktur 1 angebracht.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Fahrzeugkarosserie mit einer inneren Karosseriestruktur (1) und einer äußeren Karosseriehaut (2), wobei die Karosseriestruktur (1) im Bereich eines Fahrzeugvorderbaus (10) einen linken Stützträger (12) und einen rechten Stützträger sowie einen linken Federbeintopf (14) und einen rechten Federbeintopf zur Aufnahme jeweils eines zum Fahrwerk des Fahrzeugs gehörenden Federbeins aufweist, wobei der jeweilige Federbeintopf (14) auf der zur Längsmittelebene (XZ) des Fahrzeugs gelegenen Seite des zugehörigen Stützträgers (12) liegt und wobei die Karosseriehaut (2) im Bereich des Fahrzeugvorderbaus (10) ein linkes vorderes Karosserieseitenteil (20), ein rechtes vorderes Karosserieseitenteil und eine zwischen diesen vorderen Karosserieseitenteilen angeordnete Frontklappe (22) aufweist,
**dadurch gekennzeichnet,**
**dass** das linke vordere Karosserieseitenteil (20) den linken Federbeintopf (14) überdeckt,
**dass** das rechte vordere Karosserieseitenteil den rechten Federbeintopf überdeckt,
**dass** am linken Stützträger (12) ein linkes vorderes Karosseriehaut-Stützelement (16) angebracht ist, das das linke vordere Karosserieseitenteil (20) oberhalb der Oberseite (14') des linken Federbeintopfs (14) abstützt und einen vertikalen Abstand zwischen dem Federbeintopf (14) und dem linken vorderen Karosserieseitenteil (20) bestimmt, durch den die Oberseite (14') des linken Federbeintopfs (14) zugänglich bleibt, und
**dass** am rechten Stützträger ein rechtes vorderes Karosseriehaut-Stützelement angebracht ist, das das rechte vordere Karosserieseitenteil oberhalb der Oberseite des rechten Federbeintopfs abstützt und einen vertikalen Abstand zwischen dem Federbeintopf und dem rechten vorderen Karosserieseitenteil bestimmt, durch den die Oberseite des rechten Federbeintopfs zugänglich bleibt.

2. Fahrzeugkarosserie nach Anspruch 1,
**dadurch gekennzeichnet,**
**dass** das jeweilige Karosseriehaut-Stützelement (16) mit zumindest einer Durchgriffsöffnung (16", 19) versehen ist, durch die ein Zugang zur Oberseite (14') des zugehörigen Federbeintopfs (14) gebildet ist.

3. Fahrzeugkarosserie nach Anspruch 1 oder 2,
**dadurch gekennzeichnet,**
**dass** das jeweilige Karosseriehaut-Stützelement (16) mit einer auf der zur Fahrzeuglängsmittelebene (XY) weisenden Seite des zugehörigen Stützträgers (12) gelegenen Trägerstruktur (18) versehen oder verbunden ist, die zur Aufnahme und/oder Anbringung eines Scharniers der Frontklappe (22) und/oder eines Frontklappen-Stützelements und/oder anderer Bauteile wie beispielsweise eines Wischwasserbehälters, eines Ansauggeräuschdämpfers und/oder eines Bowdenzugs ausgebildet ist.

4. Fahrzeugkarosserie nach Anspruch 2 und 3,
**dadurch gekennzeichnet,**
**dass** die Trägerstruktur (18) auf der zur Fahrzeuglängsmittelebene (XZ) weisenden Seite des zugehörigen Federbeintopfs (14) gelegen ist und dass die zumindest eine Durchgriffsöffnung (19) in der Trägerstruktur (18) vorgesehen ist.

5. Verfahren zur Montage eines vorderen Karosserieseitenteils (20) einer Fahrzeugkarosserie nach einem der vorhergehenden Ansprüche, **gekennzeichnet durch die Schritte,**
a) Bereitstellen eines Karosserierohbaus mit einem Fahrzeugvorderbau (10), der einen linken und einen rechten Federbeintopf (14) und auf der zur Fahrzeugaußenseite weisenden Seite des jeweiligen Federbeintopfs (14) einen linken und einen rechten vorderen Stützträger (12) aufweist, die jeweils mit einem oberhalb des Federbeintopfs (14) gelegenen vorderen Karosseriehaut-Stützelement (16) versehen sind;
b) Montage der vorderen Federbeine im jeweils zugeordneten Federbeintopf (14) der Karosseriestruktur (1) und
c) Montage des jeweiligen vorderen Karosserieseitenteils (20) an der Karosseriestruktur (1), wobei sich ein Bereich der Karosseriehaut des jeweiligen vorderen Karosserieseitenteils (20) auf dem zugeordneten Karosseriehaut-Stützelement (16) abstützt.

6. Verfahren nach Anspruch 5,
**dadurch gekennzeichnet,**
**dass** das jeweilige vordere Karosserieseitenteil (20) im Schritt c) mit dem zugeordneten Karosseriehaut-Stützelement (16) fest verbunden, vorzugsweise gefügt, wird.

7. Verfahren zur Montage eines vorderen Karosserieseitenteils (20) einer Fahrzeugkarosserie nach einem der vorhergehenden Ansprüche, **gekennzeichnet durch die Schritte,**
a') Bereitstellen eines Karosserierohbaus mit einem Fahrzeugvorderbau (10), der einen linken und einen rechten Federbeintopf (14) und auf der zur Fahrzeugaußenseite weisenden Seite des jeweiligen Federbeintopfs (14) einen linken und einen rechten vorderen Stützträger (12) aufweist, die jeweils mit einem oberhalb des Federbeintopfs (14) gelegenen vorderen Karosseriehaut-Stützelement (16) versehen sind;
b') Montage des jeweiligen vorderen Karosserieseitenteils (20) an der Karosseriestruktur (1), wobei sich ein Bereich der Karosseriehaut des jeweiligen vorderen Karosserieseitenteils (20) auf dem zugeordneten Karosseriehaut-Stützelement (16) abstützt und
c') Montage der vorderen Federbeine im jeweils zugeordneten Federbeintopf (14) der Karosseriestruktur (1).

8. Verfahren nach Anspruch 7,
**dadurch gekennzeichnet,**
**dass** das jeweilige vordere Karosserieseitenteil (20) im Schritt b) mit dem zugeordneten Karosseriehaut-Stützelement (16) fest verbunden, vorzugsweise verschweißt, verklebt oder verschraubt, wird.

## Claims

1. A motor vehicle body with an inner body structure (1) and an outer body shell (2), wherein the body structure (1) has, in the region of a vehicle front section (10), a left support bracket (12) and a right support bracket and a left shock absorber plate (14) and a right shock absorber plate for holding in each case a shock-absorbing leg belonging to the chassis of the vehicle, wherein the respective shock absorber plate (14) is positioned on the side of the associated support bracket (12) which is situated on the longitudinal median plane (XZ) of the vehicle and wherein the body shell (2) has a left front body side part (20), a right front body side part and a front flap (22) positioned between these front body side parts in the region of the vehicle front section (10),
**characterised in that**
the left front body side part (20) covers the left shock absorber plate (14),
the right front body side part covers the right shock absorber plate,
a left front body shell support element (16), which supports the left front body side part (20) above the upper side (14') of the left shock absorber plate (14) and determines a vertical distance between the shock absorber plate (14) and the left front body side part (20), through which the upper side (14') of the left shock absorber plate (14) remains accessible, is attached to the left support bracket (12), and
a right front body shell support element, which supports the right front body side part above the upper side of the right shock absorber plate and determines a vertical distance between the shock absorber plate and the right front body side part, through which the upper side of the right shock absorber plate remains accessible, is attached to the right support bracket.

2. A motor vehicle body according to Claim 1,
**characterised in that**
the respective body shell support element (16) has at least one access opening (16", 19) forming an access to the upper side (14') of the associated shock absorber plate (14).

3. A motor vehicle body according to Claim 1 or 2,
**characterised in that**
the respective body shell support element (16) has or is connected to a support structure (18) positioned on the side of the associated support bracket (12) facing the vehicle longitudinal median plane (XY), which support structure is designed for accommodation and/or attachment of a hinge of the front flap (22) and/or a support element for the front flap and/or other components such as a windscreen water container, an intake silencer and/or a Bowden cable.

4. A motor vehicle body according to Claim 2 or 3,
**characterised in that**
the support structure (18) is positioned on the side of the associated shock absorber plate (14) facing the vehicle longitudinal median plane (XZ) and that at the least one access opening (19) is provided in the support structure (18).

5. A method for installing a front body side part (20) of a motor vehicle body according to one of the preceding claims, **characterised by the following steps:**
a) Preparing a vehicle body shell with a vehicle front section (10) that has a left and a right shock absorber plate (14) and a left and a right front support bracket (12) on the side of the respective shock absorber plate (14) facing the vehicle exterior, each support bracket having a front body shell support element (16) positioned above the shock absorber plate (14);
b) Installing the front shock-absorbing legs in the respectively allocated shock absorber plate (14) of the body structure (1) and
c) Installing the respective front body side part (20) on the body structure (1), wherein an area of the body shell of the respective front body side part (20) is supported on the allocated body shell support element (16).

6. A method according to Claim 5,
**characterised in that**
the respective front body side part (20) is firmly attached, preferably joined, to the allocated body shell support element (16) in step c).

7. A method for installing a front body side part (20) of a motor vehicle body according to one of the preceding claims, **characterised by the following steps:**
a') Preparing a vehicle body shell with a vehicle front section (10) that has a left and a right shock absorber plate (14) and a left and a right front support bracket (12) on the side of the respective shock absorber plate (14) facing the vehicle exterior, each support bracket having a front body shell support element (16) above the shock absorber plate (14);
b') Installing the respective front body side part (20) on the body structure (1), wherein an area of the body shell of the respective front body side part (20) is supported on the allocated body shell support element (16) and
c') Installing the front shock-absorbing legs in the respectively assigned shock absorber plate (14) of the body structure (1).

8. A method according to Claim 7,
**characterised in that**
the respective front body side part (20) is firmly attached, preferably welded, glued or screwed to the allocated body shell support element (16) in step b).

## Revendications

1. Carrosserie de véhicule ayant une structure de carrosserie interne (1) et une peau de carrosserie externe (2), la structure de carrosserie (1) comprenant, dans la zone de la coque avant (10) du véhicule une poutre de support gauche (12) et une poutre de support droite ainsi qu'un pot de jambe de suspension gauche (14) et un pot de jambe de suspension droit pour recevoir respectivement une jambe de suspension faisant partie du train de roulement du véhicule, chaque pot de jambe de suspension (14) étant situé sur le côté de la poutre de support (12) associée situé vers le plan longitudinal médian (XZ) du véhicule, et la peau de carrosserie (2) comportant, dans la zone de la coque avant du véhicule (10), une partie latérale de carrosserie avant gauche (20), une partie latérale de carrosserie avant droite, et un capot avant (22) installé entre ces parties latérales de carrosserie avant,
**caractérisée en ce que**
la partie latérale de carrosserie avant gauche (20) recouvre le pot de jambe de suspension gauche (14),
la partie latérale de carrosserie avant droite recouvre le pot de jambe de suspension droit,
sur la poutre de support gauche (12) est monté un élément de support de la peau de carrosserie avant gauche (16) qui supporte la partie latérale de carrosserie avant gauche (20) au-dessus du côté supérieur (14') du pot de jambe de suspension gauche (14), et détermine la distance verticale entre le pot de jambe de suspension (14) et la partie latérale de carrosserie avant gauche (20) par laquelle le côté supérieur (14') du pot de jambe de suspension gauche (14) reste accessible, et
sur la poutre de support droite est monté un élément de support de la peau de carrosserie avant droite qui supporte la partie latérale de carrosserie avant droite au-dessus du côté supérieur du pot de jambe de suspension droit et détermine la distance verticale entre le pot de jambe de suspension et la partie latérale de carrosserie avant droite par laquelle le côté supérieur du pot de jambe de suspension droit reste accessible.

2. Carrosserie de véhicule conforme à la revendication 1,
**caractérisée en ce que**
chaque élément de support de peau de carrosserie (16) est équipé d'au moins une ouverture de passage (16", 19) permettant d'obtenir un accès au côté supérieur (14') du pot de jambe de suspension (14) associé.

3. Carrosserie de véhicule conforme à la revendication 1 ou 2,
**caractérisée en ce que**
chaque élément de support de peau de carrosserie (16) est équipé ou relié à une structure de support (18) située sur le côté de la poutre de support (12) associée tourné vers le plan longitudinal du véhicule (XY), et réalisée pour permettre de recevoir et/ou d'installer une charnière du capot avant (22), et/ou d'un élément de support du capot avant, et/ou un autre composant, tel qu'à titre d'exemple, un réservoir d'eau de lavage, un amortisseur de bruit d'aspiration et/ou un câble de Bowden.

4. Carrosserie de véhicule conforme à l'une des revendications 2 et 3,
**caractérisée en ce que**
la structure de support (18) est située sur le côté du pot de jambe de suspension (14) associé tourné vers le plan longitudinal médian (XZ) du véhicule, et l'ouverture de passage (19) est située dans la structure de support (18).

5. Procédé de montage d'une partie latérale de carrosserie avant (20) d'une carrosserie de véhicule conforme à l'une des revendications précédentes,
**caractérisé en ce qu'**il comporte les étapes suivantes consistant à :
a) se procurer une coque de carrosserie brute avec une coque avant de véhicule (10) qui comporte un pot de jambe de suspension avant gauche et un pot de jambe de suspension avant droit (14), et sur le côté de chaque pot de jambe de suspension (14) tourné vers le côté externe du véhicule une poutre de support avant gauche et une poutre de support avant droite (12) qui sont respectivement équipées d'un élément de support de peau de carrosserie avant (16) située au-dessus du pot de jambe de suspension (14),
b) monter les jambes de suspensions avant dans les pots de jambe de suspension (14) respectivement associés de la structure de carrosserie (1), et
c) monter les parties latérales de carrosserie avant (20) respectives sur la structure de carrosserie (1), une zone de la peau de carrosserie de chaque partie latérale de carrosserie avant (20) s'appuyant sur l'élément de support de peau de carrosserie (16) associé.

6. Procédé conforme à la revendication 5,
**caractérisé en ce que**
lors de l'étape c) chaque partie latérale de carrosserie avant (20) est reliée solidairement de préférence assemblée à l'élément de support de peau de carrosserie (16) associé.

7. Procédé de montage d'une partie latérale de carrosserie avant (20) d'une carrosserie de véhicule conforme à l'une des revendications précédentes,
**caractérisé en ce qu'**il comprend les étapes suivantes consistant à :
a') se procurer une coque de carrosserie brute avec une coque avant de véhicule (10) qui comporte un pot de jambe de suspension gauche et un pot de jambe de suspension droit (14), et sur le côté de chaque pot de jambe de suspension (14) tourné vers le côté externe du véhicule une poutre de support avant gauche et une poutre de support avant droite (12) qui comportent respectivement un élément de support de peau de carrosserie avant (16) situé au-dessus du pot de jambe de suspension (14),
b') monter chaque partie latérale de carrosserie avant (20) sur la structure de carrosserie (1), une zone de la peau de carrosserie de chaque partie latérale de carrosserie avant (20) s'appuyant sur l'élément de support de peau de carrosserie (16) associé, et
c') monter la jambe de suspension avant dans le pot de jambe de suspension (14) de la structure de carrosserie (1) respectivement associée.

8. Procédé conforme à la revendication 7,
**caractérisé en ce que**
lors de l'étape b) chaque partie latérale de carrosserie avant (20) est reliée solidairement, de préférence soudée ou collée ou vissée avec l'élément de support de peau de carrosserie (16) associé.
